# FASCICULE DE BREVET EUROPEEN

(11) **EP 2 394 932 B1**
(45) Date de publication et mention de la délivrance du brevet: **05.06.2013**
(21) Numéro de dépôt: 10306436.6
(22) Date de dépôt: 16.12.2010
(51) Int. Cl.: B65D 85/816

(54) **Capsule à zone d'amorce de rupture**
Kapsel mit Anbruchzone
Capsule with weakened area

(30) Priorité: 11.06.2010 FR 1054651; 11.06.2010 FR 1054652; 11.06.2010 FR 1054653
(43) Date de publication de la demande: 14.12.2011
(73) Titulaire: Frydman, Alain, 75008 Paris (FR)
(72) Inventeur: Frydman, Alain, 75008 Paris (FR)
(74) Mandataire: Blot, Philippe Robert Emile

(56) Documents cités:
- EP-A1- 1 767 467
- EP-A1- 2 210 826
- EP-A1- 2 284 100
- EP-A1- 2 287 090
- WO-A1-2009/050540
- WO-A1-2009/130311
- WO-A2-2005/066040
- FR-A1- 2 373 999
- FR-A5- 2 211 924
- GB-A- 2 023 086
- US-A1- 2010 064 899

## Description

La présente invention concerne une capsule pour l'extraction d'une boisson sous pression, du type comprenant un corps en forme de coupelle et un opercule délimitant ensemble une chambre contenant une substance pour la préparation d'une boisson, le corps comprenant une paroi latérale extérieure sensiblement tronconique et un fond venu de matière avec la paroi latérale et fermant la paroi latérale extérieure à une extrémité arrière du corps, l'opercule fermant la paroi latérale extérieure à l'extrémité avant du corps, la capsule étant adaptée pour être disposée dans un dispositif d'extraction de sorte qu'un liquide d'extraction sous pression pénètre dans la capsule par le fond et en sorte par l'opercule.

FR 2 373 999 décrit une telle capsule destinée à être utilisée dans un dispositif d'extraction de boissons, afin de produire une boisson telle que du café.

Il existe un risque qu'une telle capsule s'affaisse lors de la fermeture du dispositif d'extraction de boisson et/ou de l'injection du liquide sous pression

En outre, de telles capsules sont particulièrement chères à produire, en particulier quand elles sont produites en grandes séries.

Enfin, lorsqu'une telle capsule est utilisée dans un dispositif d'extraction comportant un logement de réception de la capsule et un support contre lequel est appliquée la capsule, l'opercule est plaqué contre le support, ce qui empêche un écoulement satisfaisant du liquide à travers la capsule.

Le document WO 2005/066040 A2 décrit en outre un autre type de capsule de l'art antérieur.

Un but de l'invention est de fournir une capsule permettant de limiter le risque d'affaissement tout en permettant l'extraction d'une boisson. D'autres buts de l'invention sont de proposer une capsule pouvant être facilement calibrée de façon à ajuster le niveau de pression auquel le liquide d'extraction pénètre dans la capsule, de proposer une capsule à coût réduit, et de fournir une capsule compatible avec de nombreux dispositifs d'extraction de boisson.

A cet effet, un premier aspect de l'invention concerne une capsule selon l'objet de la revendication 1.

Selon d'autres modes de réalisation, la capsule comporte une ou plusieurs des caractéristiques suivantes, prise(s) isolément ou suivant toute(s) combinaison(s) techniquement possible(s) :
- la région centrale comprend une portion de fond et un plot central faisant saillie depuis la portion de fond vers l'extérieur,
- la région centrale comprend une nervure annulaire faisant saillie vers l'intérieur du corps, l'évidement présentant la forme d'une tranchée annulaire à l'extérieur du corps,
- la région centrale comprend une portion de fond plate fermant axialement l'évidement,
- la ou chaque région de moindre résistance est formée dans la portion de fond,
- le fond comprend au moins une nervure de renforcement de la région centrale,
- le corps comprend au moins une nervure radiale de rigidification de la région périphérique,
- avant rupture de la ou chaque zone de moindre résistance, le fond et la paroi latérale extérieure du corps sont imperméables à l'air et aux liquides,
- le plot central a une forme tronconique,
- le plot central a une forme hémisphérique,
- l'opercule comprend un filtre et une membrane,
- le filtre est disposé en retrait de l'extrémité avant du corps, vers la chambre, la membrane s'étendant le long de l'extrémité avant,
- l'espace entre le filtre et la membrane est rempli d'azote,
- la membrane est pelable,
- la paroi latérale extérieure et le fond sont formés d'une première matière plastique, et le corps comprend un rebord annulaire s'étendant radialement vers l'extérieur depuis la paroi latérale extérieure et délimitant l'extrémité avant du corps, ledit rebord annulaire étant formé d'une deuxième matière plastique, différente de la première matière plastique,
- la région centrale comprend une portion externe tubulaire s'étendant axialement vers l'intérieur de la chambre à partir de la région périphérique, la ou chaque zone de moindre résistance étant formée à la jonction entre la portion de fond et la portion externe,
- la ou chaque zone de moindre résistance est adaptée pour se rompre à une pression du liquide sous pression comprise entre 1 et 3 bars.

Selon d'autres modes de réalisation, ladite capsule comporte une ou plusieurs des caractéristiques suivantes, prise(s) isolément ou suivant toute(s) combinaison(s) techniquement possible(s) :
- le fond comporte une région centrale comportant une nervure annulaire de renforcement du fond faisant saillie vers l'intérieur du corps et délimitant une tranchée annulaire à l'extérieur du corps
- la nervure annulaire possède une section en U définie par deux portions latérales reliées par une base, au moins une zone de faiblesse étant définie dans la base ;
- la nervure annulaire définit un plot central entouré par la tranchée annulaire, le plot central comprenant au moins une zone de moindre résistance ;
- le fond comprend une région périphérique arrondie à concavité tournée vers l'intérieur du corps ;
- le fond et la paroi latérale du corps sont étanches à l'air et à l'eau ;
- le corps comporte un rebord annulaire s'étendant radialement vers l'extérieur depuis la paroi latérale, le rebord définissant une extrémité de la capsule à l'opposé du fond ;
- l'opercule comprend un filtre ;
- l'opercule comprend une membrane étanche à l'air et à l'eau ; et
- la membrane est munie de lignes d'affaiblissement pour l'ouverture de la membrane sous l'effet de la seule pression d'un fluide sous pression.

>

Selon d'autres modes de réalisation, ladite capsule comporte une ou plusieurs des caractéristiques suivantes, prise(s) isolément ou suivant toute(s) combinaison(s) techniquement possible(s) :
- le filtre et la membrane sont disposés en retrait par rapport à l'extrémité avant du corps

- la paroi latérale comporte un épaulement interne en retrait par rapport à l'extrémité avant du corps, le filtre et la membrane étant fixés sur l'épaulement interne.
- la distance de retrait de la membrane de sortie par rapport à l'extrémité avant est supérieure à 1 mm ;
- la membrane de sortie est étanche à l'air et à l'eau ;
- la membrane de sortie comporte au moins une ligne de rupture ;
- le filtre de sortie est disposé entre la chambre et la membrane de sortie ;
- le filtre et la membrane de sortie sont accolés l'un à l'autre ;
- le filtre de sortie est en matériau plastique tissé ou perforé ; et
- la membrane est un film en matière plastique ou métallique, en particulier en aluminium.

Un deuxième aspect de l'invention concerne un système comprenant une capsule selon l'invention, et un dispositif d'extraction comportant un logement destiné à recevoir la capsule, un support et un conduit d'amenée de liquide d'extraction.

L'invention sera mieux comprise à la lecture de la description qui va suivre, donnée uniquement à titre d'exemple et faite en se référant aux dessins annexés, sur lesquels :
- la Figure 1 représente une vue en perspective d'une première variante d'une capsule selon un premier mode de réalisation de l'invention ;
- la Figure 2 est une vue en coupe longitudinale de la capsule de la Figure 1 ;
- la Figure 3 est une vue de face de la capsule de la Figure 1 ;
- les Figures 4 et 5 sont des vues de la capsule de la Figure 1, installée dans un dispositif d'extraction en configurations respectivement partiellement ouverte et fermée ;
- la Figure 6 est une vue en coupe longitudinale d'une seconde variante de la capsule selon le premier mode de réalisation ;
- la Figure 7 est une vue en coupe longitudinale d'une troisième variante de la capsule selon le premier mode de réalisation ;
- la Figure 8 est une vue de la capsule de la Figure 6, installée dans un dispositif d'extraction en configuration fermée ;
- la Figure 9 est une vue en perspective d'une première variante d'une capsule selon un deuxième mode de réalisation de l'invention ;
- la Figure 10 est une vue en coupe longitudinale de la capsule de la Figure 9 ;
- la Figure 11 est une vue de derrière de la capsule de la Figure 9 ;
- la Figure 12 est une vue d'un détail marqué XII sur la Figure 10 ;
- la Figure 13 est une vue d'un détail marqué XIII sur la Figure 10 ;
- la Figure 14 est une vue de la capsule de la Figure 8, installée dans un premier dispositif d'extraction en configuration fermée ;
- la Figure 15 est une vue similaire à la Figure 14, la capsule étant installée dans un deuxième dispositif d'extraction en configuration fermée ;
- la Figure 16 est une vue en coupe longitudinale d'une deuxième variante d'une capsule selon le deuxième mode de réalisation ;
- la Figure 17 est une vue d'un détail marqué XVII sur la Figure 16 ;
- la Figure 18 est une vue de derrière d'une troisième variante d'une capsule selon le deuxième mode de réalisation ;
- la Figure 19 est une vue de derrière d'une quatrième variante d'une capsule selon le deuxième mode de réalisation ;
- la Figure 20 est une vue de derrière d'une cinquième variante d'une capsule selon le deuxième mode de réalisation ;
- la Figure 21 est une vue de derrière d'une sixième variante d'une capsule selon le deuxième mode de réalisation ; et
- la Figure 22 est une vue de derrière d'une septième variante d'une capsule selon le deuxième mode de réalisation.

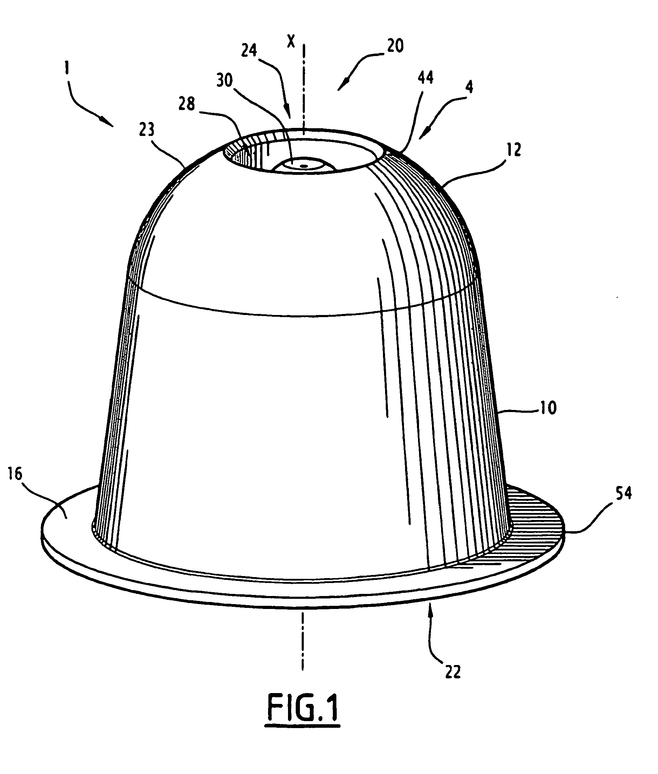

La capsule 1 selon une premier mode de réalisation de l'invention, représentée sur les Figures 1 à 3, comporte un corps 4 creux et un opercule 6 de sortie délimitant ensemble une chambre 8 intérieure contenant une substance (non représentée) pour la préparation d'une boisson.

Le corps 4 présente une forme générale de coupelle et comprend une paroi latérale 10, un fond 12 fermant une extrémité arrière 20 fermée du corps 4, et un rebord annulaire 16 entourant une extrémité avant 22 ouverte du corps 4.

Le corps 4 est réalisé d'un seul tenant. La paroi latérale 10, le fond 12 et le rebord annulaire 16 sont venus de matière. Le corps 4 est réalisé en un matériau étanche à l'air et à l'eau dans un matériau plastique ou dérivé du plastique.

La paroi latérale 10 s'étend à partir du fond 12 suivant un axe longitudinal X jusqu'à l'extrémité avant 22 du corps 4.

La paroi latérale 10 comprend un épaulement intérieur 14. L'épaulement 14 s'étend dans un plan radial et est orienté vers l'avant.

La paroi latérale 10 est sensiblement tronconique de révolution autour de l'axe longitudinal X. La paroi latérale 10 comprend un tronçon arrière 18, relativement souple, s'étendant à partir du fond 12 et un tronçon avant 19, relativement rigide, prolongeant axialement le tronçon arrière 18. Le tronçon avant 19 présente une épaisseur croissante axialement, supérieure à celle du tronçon arrière 18.

Le fond 12 présente une région périphérique 23, s'étendant radialement vers l'intérieur à partir de la paroi latérale 10, et une région centrale 24.

La région périphérique 23 est arrondie. Elle s'étend radialement vers l'intérieur et axialement vers l'arrière à partir de la paroi latérale 10, et présente une concavité tournée vers l'intérieur du corps 4.

La région centrale 24 comprend une nervure annulaire 26 faisant saillie axialement vers l'intérieur du corps 4 à partir de la région périphérique 23. La nervure annulaire 26 définit une tranchée annulaire 28 ouverte à l'extérieur du corps 4 vers l'arrière. La nervure annulaire 26 définit un plot central 30 creux faisant saillie axialement à partir du fond de la tranchée annulaire 28 en définissant un évidement à l'intérieur du corps 4.

La région centrale 24 présente au moins une zone de moindre résistance 32 prévue pour rompre sous l'effet d'un fluide sous pression. Les zones de moindre résistance 32 sont prévues par exemple sous la forme de zones de moindre épaisseur de la région centrale 24, définies par exemple par des indentations ménagée dans la région centrale 24.

Les zones de moindre résistance 32 sont prévues dans des parois de la nervure annulaire 26 et/ou sur le plot central 30.

Dans l'exemple illustré, la nervure annulaire 26 comprend une portion externe 36 tubulaire s'étendant axialement vers l'intérieur à partir de la région périphérique 23, une portion interne 34 tubulaire délimitant une face latérale du plot central 30 et une portion de fond 38 s'étendant radialement entre la portion externe 36 et la portion interne 34 en conférant à la nervure annulaire 26 une section transversale sensiblement en forme de « U ».

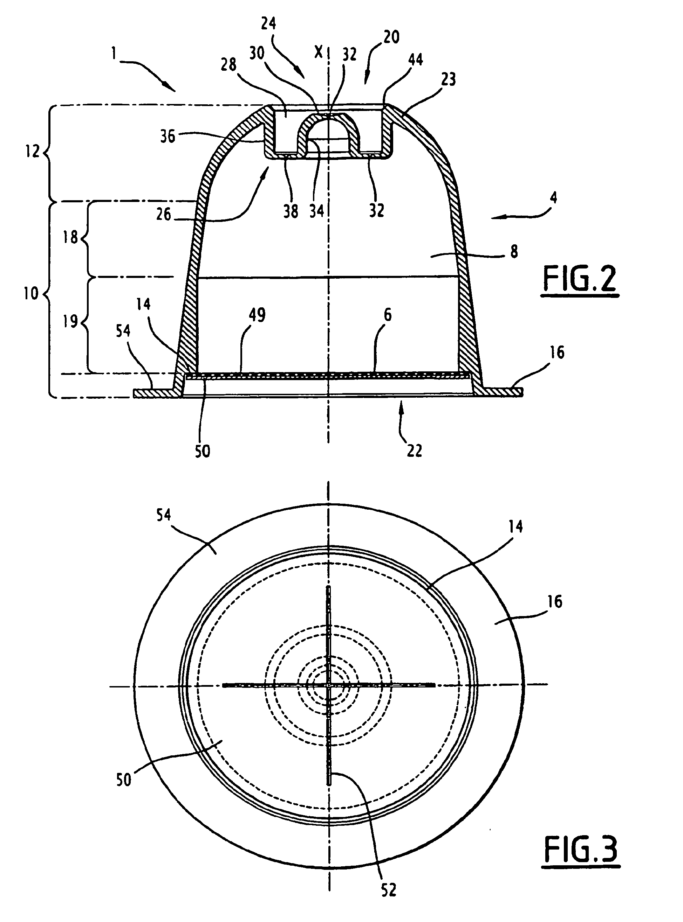

Comme représenté sur la Figure 2, des zones de moindre résistance 32 sont prévues dans la portion de fond 38 et dans le plot central 30 sous la forme de zones de moindre épaisseur.

En variante, la région centrale 24 est dépourvue de zone de moindre résistance 32 dans le plot central 30. En variante ou en option, la nervure annulaire 26 possède des zones de moindre résistance 32 dans la portion externe 36 et/ou la portion interne 34.

Dans une autre variante possible différente de celle de la figure 2 par la forme de la nervure annulaire 26, la portion externe 36 et la portion interne 34 convergent en conférant à la nervure annulaire 26 une section transversale sensiblement en forme de « V ». Dans ce cas, des zones de moindre résistance 32 peuvent être prévues dans la portion externe 36, la portion interne 34 et/ou le plot central 30.

Comme représenté sur la Figure 2, la tranchée annulaire 28 présente un bord extérieur 44 anguleux, de préférence biseauté, à la jonction entre la nervure annulaire 26 et la région périphérique 23. Le bord extérieur 44 délimite l'extrémité arrière 20 de la capsule 1. Le plot central 30 est axialement en retrait vers l'intérieur du corps 4 par rapport au bord extérieur 44.

De préférence, la région périphérique 23 possède une surépaisseur le long du bord extérieur 44, de façon à renforcer le bord extérieur 44. La région périphérique 23 présente par exemple une épaisseur croissante depuis la paroi latérale 10 vers le bord extérieur 44.

L'épaulement interne 14 est annulaire et fait saillie radialement depuis la paroi latérale 10 vers l'intérieur du corps 4. Il est en retrait axialement vers l'intérieur du corps 4 par rapport à l'extrémité avant 22 du corps 4 et au rebord annulaire 16.

L'opercule 6 est fixé par sa périphérie sur l'épaulement interne 14 de sorte que l'opercule 6 est disposé en retrait axialement vers l'intérieur du corps 4 par rapport à l'extrémité avant 22 du corps 4. De préférence, la distance de retrait de l'opercule 6 par rapport à l'extrémité avant 22 du corps 4 est supérieure à 1 mm.

L'opercule 6 ferme l'extrémité avant 22 du corps 4.

L'opercule 6 comprend un filtre 49 de sortie propre à laisser passer un fluide sous pression en retenant la substance contenue dans la chambre 8. Le filtre 49 est en papier filtre poreux, en matériau plastique tissé ou en film plastique perforé.

L'opercule 6 comprend en outre une membrane 50 étanche à l'air et à l'eau doublant le filtre 49. La membrane 50 présente des lignes d'affaiblissement 52, de sorte que la membrane 50 est propre à se déchirer sous le seul l'effet de la pression d'un liquide. Dans l'exemple représenté sur les Figures 1 et 3, les lignes d'affaiblissement 52 forment une croix. En variante, elles forment un cercle, des arcs de cercle, ou toute autre forme adaptée pour permettre un déchirement optimal de la membrane 50.

Le filtre 49 est disposé entre la chambre 8 et la membrane 50. Le filtre 49 et la membrane 50 sont accolés l'un à l'autre. Le filtre 49 et la membrane 50 se présentent par exemple sous la forme d'un film complexe bicouche.

Le rebord annulaire 16 s'étend radialement vers l'extérieur à partir de la paroi latérale 10. Le rebord annulaire 16 définit l'extrémité avant 22 du corps 4. Le rebord 16 présente une région marginale 54 libre. Il ne supporte pas d'élément d'étanchéité rapporté ou de relief d'étanchéité déformable. Tel que représenté sur les figures 1 à 3, le rebord annulaire 16 est sensiblement plan.

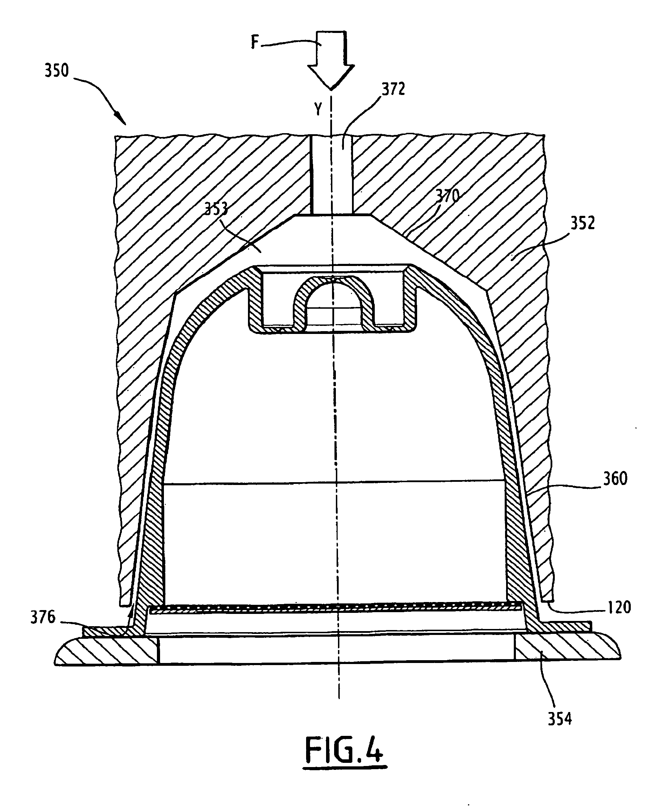

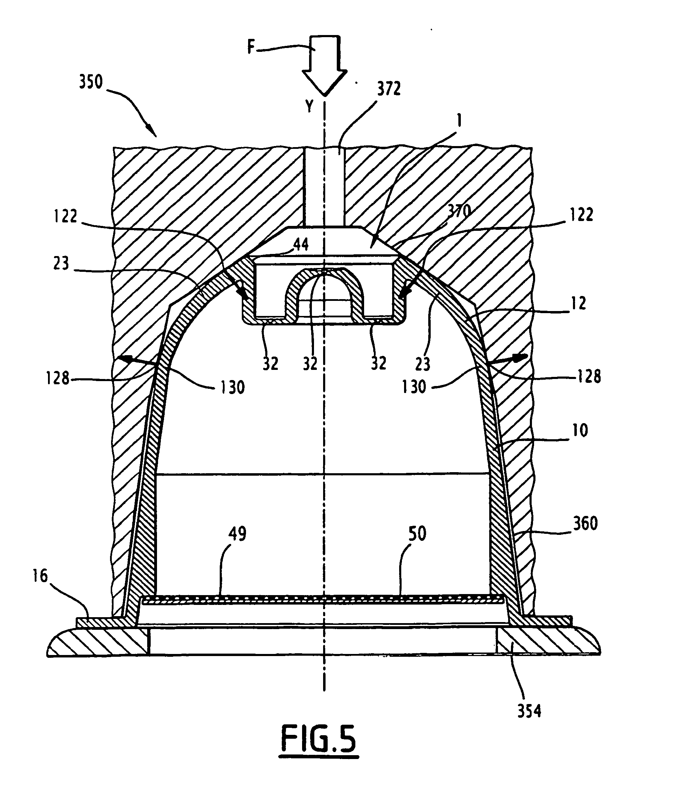

La capsule 1 est destinée à être disposée dans un dispositif d'extraction 350, représenté sur les Figures 4 et 5.

Le dispositif d'extraction 350 comporte un élément de réception 352 creux, délimitant un logement 353 de réception du la capsule 1, et un support 354. Il est propre à être manoeuvré entre une configuration ouverte dans laquelle l'élément de réception 352 et le support 354 sont mutuellement écarté pour introduire la capsule 1 dans l'élément de réception 352, et une position fermée, représentée sur la Figure 5, dans laquelle l'élément de réception 352 et le support 354 sont mutuellement rapprochés, pour injecter le liquide d'extraction dans la capsule 1. Sur la Figure 4, le dispositif 350 est représenté dans une configuration intermédiaire dans laquelle il est partiellement ouvert, mais toutefois pas suffisamment ouvert pour permettre l'introduction de la capsule 1.

Le logement 353 présente une face latérale intérieure 360, un fond de logement 370 et un conduit 372 d'amenée de liquide d'extraction débouchant sur le fond de logement 370, sensiblement au centre et une ouverture 316 d'introduction de la capsule 1.

La face latérale intérieure 360 est de révolution autour d'un axe longitudinal Y. Sur l'exemple représenté, elle est sensiblement tronconique. Lorsque la capsule 1 est placée dans le dispositif d'extraction 350, les axes longitudinaux X de la capsule 1 et Y du logement 353 se confondent sensiblement.

L'élément de réception 352 présente un bord annulaire 380 entourant l'ouverture 316.

La capsule 1 présente une longueur axiale suffisante pour que, en configuration fermée du dispositif d'extraction 350, la capsule 1 soit en appui par son rebord annulaire 16 contre le support 354 et par son fond 12 contre le fond de logement 370 suivant une ligne de contact annulaire fermée 122, définie de préférence sur la région périphérique 23 le long du bord extérieur 44 de la tranchée annulaire 28.

La capsule 1 est avantageusement adaptée pour se déformer élastiquement sous l'effet d'une force axiale F de compression pour assurer un contact suffisant entre le fond 12 et le fond de logement 370.

En option la capsule 1 est adaptée pour que, sous l'effet de la force axiale F de compression, au moins une zone annulaire 130 du fond 12 et/ou de la paroi latérale 10 de la capsule 1 se dilate radialement vers l'extérieur de façon à assurer un contact 128 supplémentaire avec la face latérale 360 du logement 353, suivant une ligne de contact annulaire fermée.

Le procédé d'extraction de la capsule 1 par le dispositif d'extraction 350 va maintenant être décrit.

La capsule 1 est d'abord placée dans le dispositif 350 en configuration ouverte, puis le dispositif 350 est manoeuvré pour se déplacer en configuration fermée.

Lors de ce déplacement vers la configuration fermée, la capsule 1 vient en appui par son rebord annulaire 16 contre le support 354 puis l'élément de réception 352 appuie axialement sur le fond 12 de la capsule 1, de sorte que le contact 122 se crée, et le corps 4 se déforme dans son ensemble de sorte que le contact 128 se crée avec l'élément de réception 352 du dispositif 350.

Une fois le dispositif 350 en configuration fermée, le fluide d'extraction est injecté sous pression par le conduit 372. Sous l'effet de la pression du fluide d'extraction, les zones de moindre résistance 32 de la région centrale 24 du fond 12 se rompent et le fluide d'extraction pénètre dans la capsule 1.

La pression de liquide dans la capsule 1 augmente alors et, sous l'effet de cette pression, la membrane de sortie 50 se déchire. Le fluide s'échappe alors hors de la capsule 1 en traversant l'opercule 6 en étant filtré par le filtre 49.

Grâce à l'invention, le fond renforcé par une nervure annulaire permet de réaliser le corps de la capsule en un matériau relativement souple, déformable, sans que le fond ne s'effondre vers l'intérieur de la capsule sous l'effet de la pression de fluide. La convexité du fond permet de définir un fond résistant et déformable élastiquement, avec un volume de la chambre important permettant de charger une plus grande quantité de substance dans la capsule. La nervure délimitant dans la face extérieure une tranchée annulaire permet d'améliorer l'injection du liquide d'extraction dans la capsule. La présence d'un rebord annulaire permet d'augmenter la stabilité de la capsule sur le support du dispositif d'extraction.

La capsule possède un corps en forme de coupelle dont le fond est étanche à l'air et à l'eau, le corps étant fermée par un opercule étanche à l'air et à l'eau. L'étanchéité de la capsule permet de conserver la substance à l'abri de l'air et de l'humidité. L'opercule possède une membrane se déchirant sous l'effet du fluide sous pression permettant une ouverture appropriée de l'opercule à partir d'un niveau de pression déterminé, avec un effet retard bénéfique pour une extraction de qualité. L'opercule en retrait axialement vers l'intérieur du corps évite toute interférence avec le support du dispositif d'extraction avant l'ouverture de la membrane, et permet ainsi une ouverture maîtrisée de la capsule. La membrane associée à un filtre permet d'assurer une extraction de la substance dans des conditions de pression satisfaisantes avec une retenue efficace de la substance à l'intérieur de la capsule. L'opercule fourni sous la forme d'un film complexe facilite la fabrication de la capsule à faible coût.

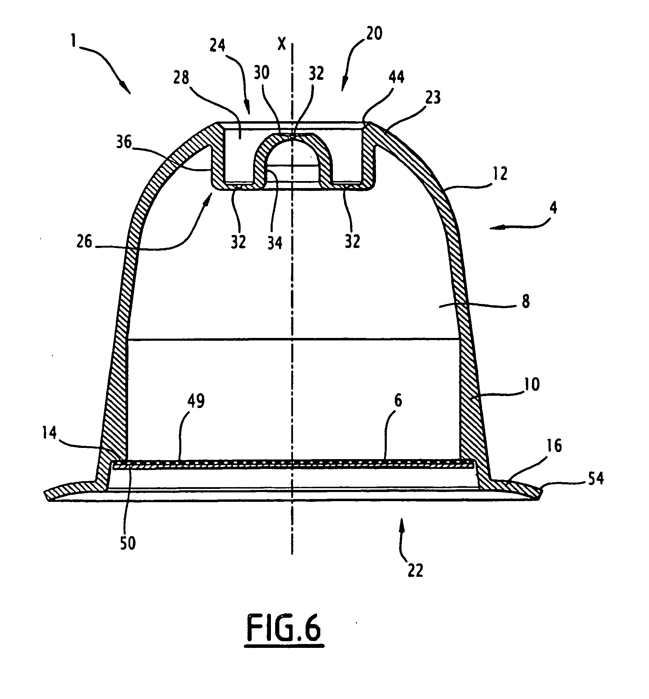

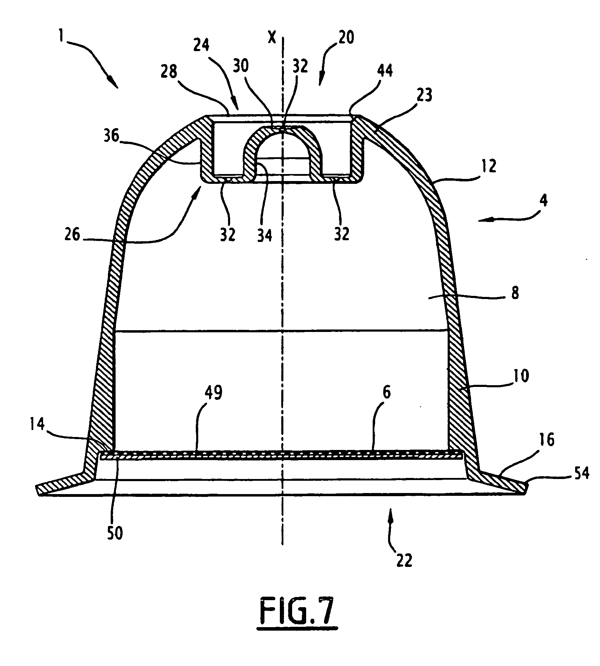

Les variantes de capsule illustrées sur les figures 6 et 7 diffèrent de celle des figures 1 à 3 en ce que la région marginale 54 du rebord annulaire 16 est inclinée vers l'avant de la capsule 1. Tel que représenté sur la Figure 6, le rebord annulaire 16 est incurvé vers l'avant de la capsule 1. Tel que représenté sur la Figure 7, le rebord annulaire 16 est tronconique s'évasant vers l'avant.

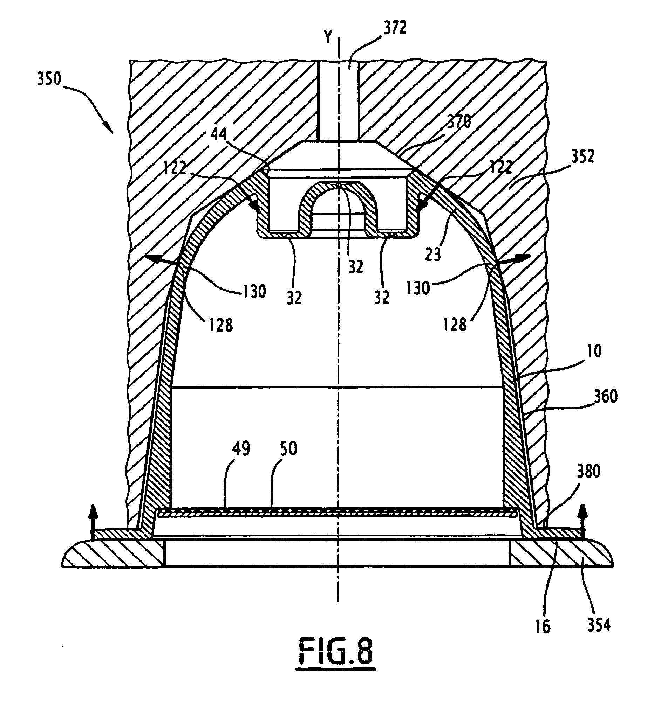

Tel qu'illustré sur la figure 8, lors de la fermeture du dispositif d'extraction 350, sous l'effet de la force d'appui exercée par le support 354, le rebord annulaire 16 se déforme en s'aplanissant.

Un tel rebord 16 permet de garantir et de renforcer le contact 122 entre le fond 12 de la capsule 1 et le fond de logement 370 à la fermeture du dispositif 350, tout en pouvant se déformer pour permettre la fermeture du dispositif d'extraction 350.

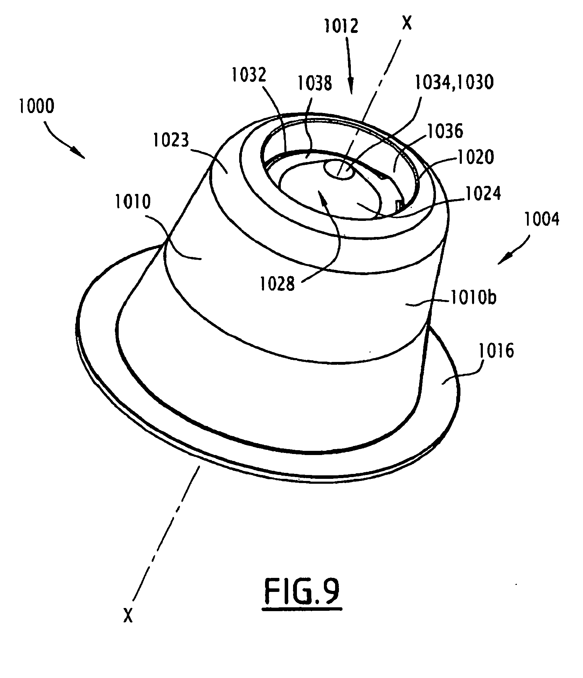

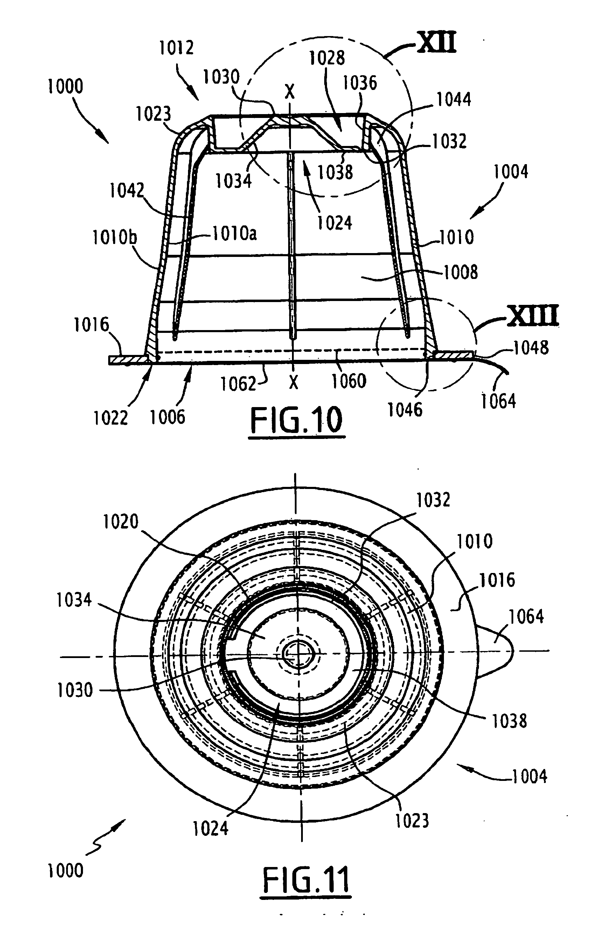

La capsule 1000 selon une deuxième mode de réalisation de l'invention, représentée sur les Figures 9 à 21, comprend, comme visible sur les Figures 9 et 10, un corps 1004 creux et un opercule 1006 de sortie délimitant ensemble une chambre 1008 intérieure contenant une substance (non représentée) pour la préparation d'une boisson.

Le corps 1004 présente une forme générale de coupelle et est étanche à l'air et à l'eau. Il comprend une paroi latérale extérieure 1010, un fond 1012 fermant une extrémité arrière 1020 du corps 1004, et un rebord annulaire 1016 entourant une extrémité avant 1022 ouverte du corps 1004.

La paroi latérale extérieure 1010 et le fond 1012 sont venus de matière et sont réalisés en un premier matériau plastique étanche à l'air et à l'eau. Le premier matériau plastique est choisi pour être inerte vis-à-vis de la substance contenue dans la capsule 1000. De préférence, ledit premier matériau est translucide et n'est pas coloré dans la masse, de façon à éviter la diffusion de la coloration dans la substance. Typiquement, le deuxième matériau plastique est du polyamide. Le polyamide n'interfère pas avec les produits alimentaires et constitue une barrière à l'air et à l'eau très performante.

De préférence, le rebord annulaire 1016 est constitué d'un deuxième matériau plastique, différent du premier matériau plastique. Le deuxième matériau plastique est préférentiellement choisi pour être un matériau de faible coût. Celui-ci n'étant pas en contact avec la substance, ses propriétés vis-à-vis de la substance n'entrent pas en compte dans le choix du deuxième matériau. Typiquement, le deuxième matériau plastique est du polyuréthane, qui est un matériau peu coûteux.

De préférence, les premier et deuxième matériaux plastiques sont des matériaux compatibles, c'est-à-dire des matériaux adaptés pour polymériser l'un avec l'autre.

Ainsi, il est possible de produire des capsules 1000 à coût réduit. Ces capsules étant destinées à être produites en très grandes séries, cela permet de réaliser des économies importantes.

De préférence, le deuxième matériau est coloré dans la masse. Ainsi, il est possible de colorer différemment les rebords annulaires 1016 de capsules 1000 contenant différentes substances, de façon à distinguer aisément une capsule 1000 contenant une première substance d'une autre capsule 1000 contenant une deuxième substance, différente de la première.

La paroi latérale extérieure 1010 s'étend à partir du fond 1012 suivant un axe longitudinal X jusqu'à l'extrémité avant 1022 du corps 1004.

La paroi latérale extérieure 1010 est sensiblement tronconique de révolution autour de l'axe longitudinal X. Elle est rigide. Elle présente une surface intérieure 1010a, orientée vers la chambre 1008, et une surface extérieure 1010b, à l'opposée de la surface intérieure 1010a.

Le fond 1012 comprend une région périphérique 1023 et une région centrale 1024.

La région périphérique 1023 est rigide. Elle est arrondie et s'étend radialement vers l'intérieur et axialement vers l'arrière à partir de la paroi latérale extérieure 1010, et présente une concavité tournée vers l'intérieur du corps 1004. Elle s'étend ainsi depuis la paroi latérale extérieure 1010 jusqu'à l'extrémité arrière 1020 du corps 1004. L'extrémité arrière 1020 est typiquement une ligne fermée, par exemple un cercle.

La région centrale 1024 rentre axialement vers l'intérieur de la chambre 1008 à partir de la région périphérique. La région centrale 1024 définit ainsi dans le fond 1012 un évidement 1028 à l'extérieur du corps 1004.

La région centrale 1024 comprend une portion externe 1036 tubulaire s'étendant axialement vers l'intérieur de la chambre 1008 à partir de la région périphérique 1023, une portion de fond 1038 s'étendant radialement vers l'intérieur à partir de l'extrémité intérieure de la potion externe 1036 et fermant l'évidement 1028, et une portion interne 1034 centrale faisant saillie vers l'extérieur à partir de la portion de fond 1038.

La portion interne 1034 définit un plot central creux 1030 dans l'évidement 1028. Celui-ci présente ainsi une forme annulaire. La portion externe 1036, la portion de fond 1038 et la portion interne 1034 définissent une nervure 1026 annulaire dans la région centrale 1024.

La portion de fond 1038 comprend au moins une zone de moindre résistance 1032 prévue pour rompre sous l'effet d'un fluide sous pression. De préférence, la ou chaque zone de moindre résistance est prévue pour rompre à une pression du fluide sous pression comprise entre 1 et 3 bars.

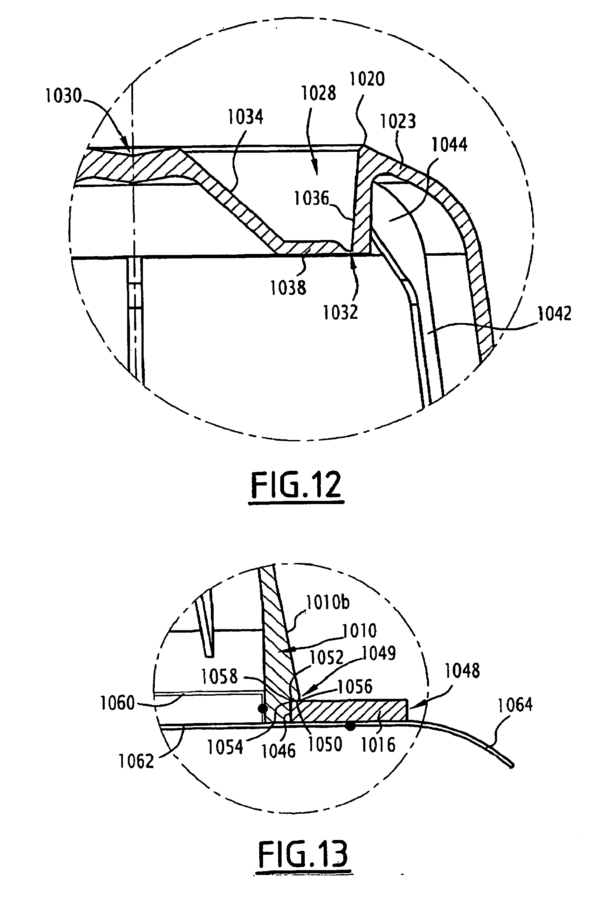

La ou chaque zone de moindre résistance 1032 est prévue par exemple sous la forme de zones de moindre épaisseur de, comme représenté sur la Figure 12. Tant que la ou chaque zone de moindre résistance 1032 n'est pas rompue, le fond 1012, et par extension l'ensemble du corps 1004, est imperméable à l'air et aux liquides.

Dans l'exemple illustré sur la Figure 11, la zone de moindre résistance est définie à la périphérie de la portion de fond 1038, à la jonction entre la portion de fond 1038 et la portion externe 1036. La zone de moindre résistance présente la forme d'un arc de cercle. L'arc de cercle s'étend de préférence sur au moins 270°.

La forme de la portion interne 1034 conditionne l'effort de cisaillement axial généré par un liquide sous pression présent dans l'évidement 1028.

Dans le mode de réalisation des figures 9 à 15, la portion interne 1034 présente une forme tronconique, s'élargissant de l'arrière vers l'avant de la capsule 1000, et saillante vers l'extérieur.

En variante, la portion interne 1034 est s'étend dans un plan radial. A une pression déterminée du fluide présent dans l'évidement 1028, une portion interne 1034 plane induit un effort de cisaillement plus élevé qu'une portion interne saillante vers l'extérieur.

Le corps 1004 comprend également des nervures longitudinales 1042 de rigidification de la paroi latérale extérieure 1010 et des nervures radiales 1044 de rigidification du fond 1012.

Chaque nervure longitudinale 1042 s'étend longitudinalement le long de la paroi latérale extérieure 1010, de préférence, comme représenté, le long de la surface intérieure 1010a. Ainsi, les nervures longitudinales sont adaptées pour favoriser l'émulsion entre le fluide sous pression et la substance contenue dans la chambre 1008. En variante, chaque nervure longitudinale 1042 s'étend le long de la surface extérieure 1010b.

Chaque nervure radiale 1044 s'étend radialement entre la portion externe 1036 et la région périphérique 1023. Les nervures radiales 1044 rigidifient le fond 12 et favorisent ainsi la génération des efforts de cisaillement induits par la pression du fluide sous pression directement sur la ou chaque zone de faiblesse 1032. Dans l'exemple représenté sur les Figures 10 à 15, chaque nervure radiale 1044 s'étend dans le prolongement d'une nervure longitudinale 1042.

Le rebord annulaire 1016 s'étend radialement vers l'extérieur, d'une bordure annulaire intérieure 1046 jusqu'à une bordure annulaire extérieure 1048, à partir de la surface extérieure 1010b de la paroi latérale extérieure 1010. Il définit l'extrémité avant 1022 du corps 1004. Il ne supporte pas d'élément d'étanchéité rapporté ou de relief d'étanchéité déformable. De préférence, il est sensiblement plan. La bordure annulaire extérieure 1048 est libre.

Comme visible sur le détail représenté sur la Figure 13, la surface extérieure 1010b de la paroi latérale extérieure 1010 définit, à proximité de l'extrémité avant 1022 du corps 1004, un dégagement annulaire 1049 définissant un épaulement 1050 et une gorge 1052 de liaison du rebord annulaire 1016 à la paroi latérale extérieure 1010.

L'épaulement 1050 est en retrait vers l'arrière par rapport à l'extrémité avant 1022. Il s'étend radialement et parallèlement à l'extrémité avant 1022, entre une extrémité intérieure 1054 et une extrémité extérieure 1056.

La gorge 1052 est formée dans l'épaulement 1050 et fait saillie longitudinalement vers l'arrière depuis l'extrémité intérieure 1054 de l'épaulement 1050.

Le rebord annulaire 1016 comprend une protubérance annulaire 1058 faisant saillie longitudinalement depuis la bordure annulaire intérieure 1046 dans la gorge 1052. La protubérance 1058 coopère avec la gorge 1052 pour renforcer la liaison du rebord annulaire 1016 à la paroi latérale extérieure 1010.

Ainsi, une partie de la paroi latérale extérieure 1010 s'étend entre le rebord annulaire 1016 et la chambre 1008, ce qui évite que la substance ne soit en contact avec le deuxième matériau.

De retour à la Figure 1, l'opercule 1006 est fixé par sa périphérie sur la paroi latérale extérieure 1010 et sur le rebord annulaire 1016. L'opercule 1006 ferme ainsi l'extrémité avant 1022 du corps 1004.

L'opercule 1006 comprend un filtre 1060 de sortie propre à laisser passer un fluide sous pression en retenant la substance contenue dans la chambre 1008. Le filtre 1060 est en papier filtre poreux, en matériau plastique tissé ou en film plastique perforé. De préférence, le filtre 1060 est, comme représenté, disposé en retrait de l'extrémité avant 1022, vers la chambre 1008, et est fixé sur sa périphérie à la surface intérieure 1010a de la paroi latérale extérieure 1010. Le filtre 1060 est par exemple disposé entre 1 et1,5 mm en retrait par rapport à l'extrémité avant 1022.

L'opercule 1006 comprend en outre une membrane 1062 étanche à l'air et à l'eau doublant le filtre 1060. De préférence, la membrane 1062 est fixée, par exemple soudée, sur le rebord annulaire 1016. La membrane 1062 s'étend le long de l'extrémité avant 1022 du corps 1004. La membrane 1062 permet de conserver la substance dans une atmosphère inerte, de façon à éviter toute oxydation de la substance.

La membrane 1062 est pelable, c'est-à-dire qu'elle peut être facilement désolidarisée du corps 1004. A cet effet, elle comprend une languette 1064 s'étendant radialement vers l'extérieur depuis le rebord annulaire 1016, pour permettre à un utilisateur de retirer aisément la membrane 1062 avant utilisation de la capsule 1000 dans un dispositif d'extraction.

En option, la membrane 1062 présente des lignes d'affaiblissement (non représentées), de sorte que la membrane 1062 est propre à se déchirer sous le seul l'effet de la pression d'un liquide. Ainsi, dans le cas où un utilisateur aurait oublié de retirer la membrane 1062 avant d'insérer la capsule 1000 dans un dispositif d'extraction, l'extraction peut être quand même exécutée normalement, sans risque d'endommagement pour le dispositif d'extraction.

Le filtre 1060 est disposé entre la chambre 1008 et la membrane 1062. L'espace entre le filtre 1060 et la membrane 1062 est de préférence rempli avec un gaz inerte, typiquement avec de l'azote.

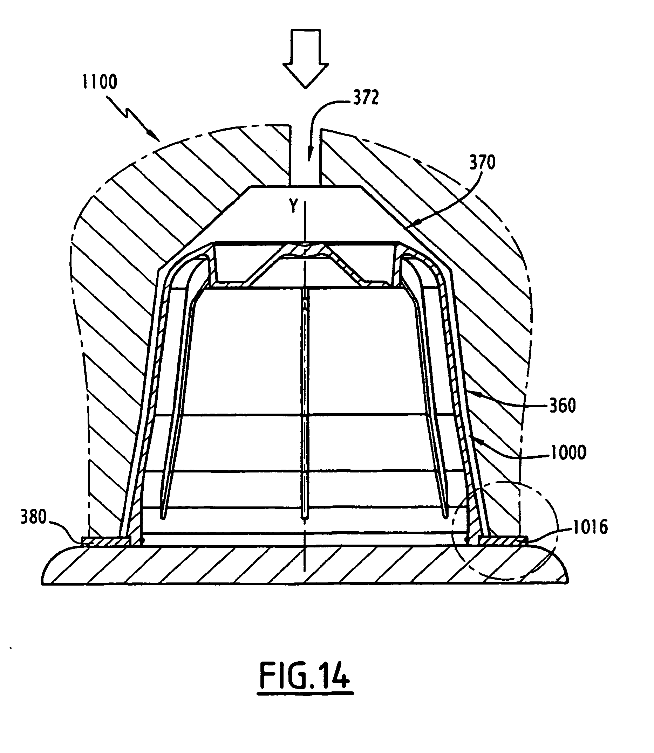

La capsule 1000 est représentée sur la Figure 14 insérée dans un dispositif 1100 d'extraction de boisson. Ce dispositif 1100 est similaire au dispositif d'extraction 350 décrit plus haut. Les éléments similaires sont désignés par les mêmes signes de référence. On notera que la capsule 1000 est adaptée pour que le bord annulaire 380 vienne en contact avec le rebord annulaire 1016 lorsque le dispositif d'extraction 1100 est en configuration fermée.

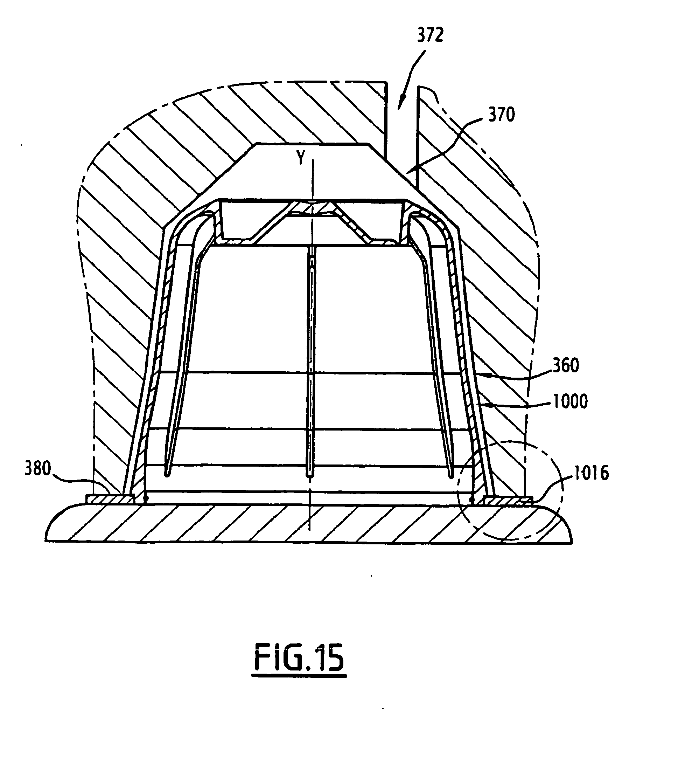

Une variante du dispositif d'extraction 1100 est représentée sur la Figure 15. Sur cette Figure, on observera que le conduit 372 d'amenée de liquide d'extraction est décalé radialement par rapport à l'axe longitudinal Y. Ainsi, la capsule 1000 est également adaptée pour être utilisée dans des dispositifs d'extraction de boisson où l'arrivée de liquide sous pression dans le logement de réception 353 ne se fait pas au centre du logement 353.

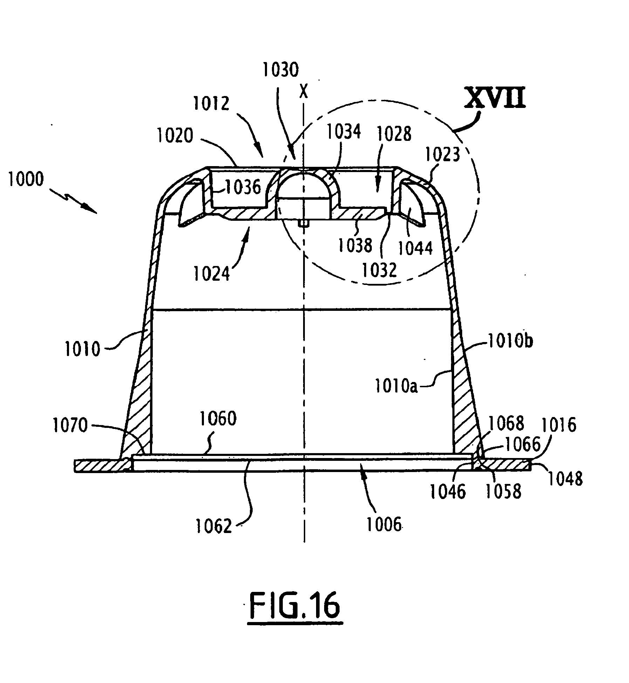

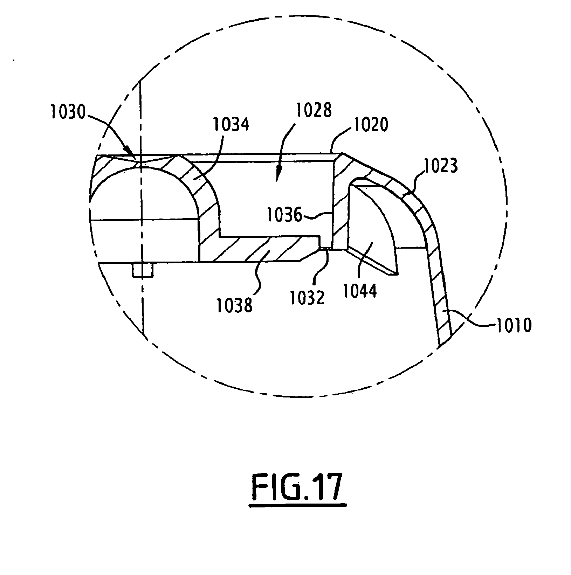

Une variante de la capsule 1000 est présentée sur les Figures 16 et 17.

Dans cette variante, la portion interne 1034 a une forme hémisphérique à concavité orientée vers l'intérieur du corps 1004. Cette forme est adaptée pour permettre la rupture de la zone de faiblesse 1032 à des pressions supérieures au cas où la portion interne 1034 présente une forme tronconique.

Le rebord annulaire 1016 n'est pas lié à la surface extérieure 1010b de la paroi latérale extérieure 1010, mais à une face annulaire avant 1066 de la paroi latérale extérieure 1010. Ladite face annulaire avant 1066 définit une gorge 1068 faisant saillie longitudinalement vers l'arrière et avec laquelle coopère la protubérance 1058 du rebord annulaire 1016 pour renforcer la liaison du rebord annulaire 1016 avec la paroi latérale extérieure 1010.

La surface intérieure 1010a de la paroi latérale extérieure 1010 définit un épaulement intérieur annulaire 1070 s'étendant dans un plan radial et étant orienté vers l'avant. L'épaulement interne 1070 est en retrait axialement vers l'intérieur du corps 1004 par rapport à l'extrémité avant 1022 du corps 1004 et au rebord annulaire 1016. Cet épaulement intérieur 1070 est adapté pour supporter l'opercule 1006.

L'épaulement intérieur 1070 étant en retrait par rapport à la face annulaire avant 1066, la substance n'est ainsi pas en contact avec le deuxième matériau formant le rebord annulaire 1016.

De même que dans le premier mode de réalisation, l'opercule 1006 est constitué par un film complexe bicouche comprenant le filtre 1060 et la membrane 1062. Ce film complexe est fixé par sa périphérie sur l'épaulement interne 1070 de sorte que l'opercule 1006 est disposé en retrait axialement vers l'intérieur du corps 1004 par rapport à l'extrémité avant 1022 du corps 1004. De préférence, la distance de retrait de l'opercule 1006 par rapport à l'extrémité avant 1022 du corps 1004 est supérieure à 1 mm.

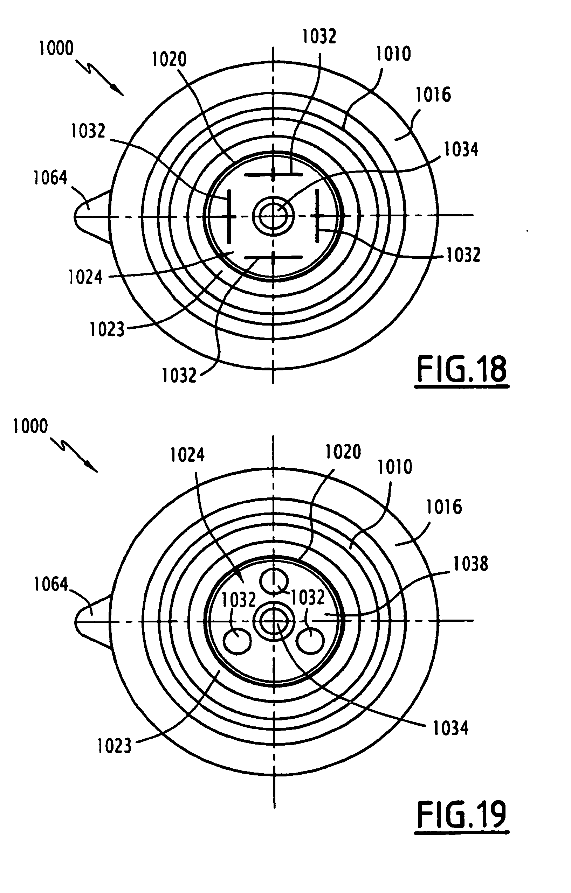

D'autres variantes de la capsule 1000 sont présentées sur les Figures 18 à 22.

Dans la variante représentée sur la Figure 18, la portion de fond 1038 comprend une pluralité de zones de moindre résistance 1032, chacune étant formée par deux lignes de faiblesse s'entrecoupant de façon à former une croix. Dans l'exemple représenté, les zones de moindre résistance 1032 sont au nombre de quatre. En variante, le nombre de zones de moindre résistance 1032 est différent.

Dans la variante représentée sur la Figure 18, la portion de fond 1038 comprend une pluralité de zones de moindre résistance 1032, chacune étant formée par une ligne de faiblesse circulaire fermée, chacune délimitant un disque n'incluant pas la portion interne 1034. Dans l'exemple représenté, les zones de moindre résistance 1032 sont au nombre de trois. En variante, le nombre de zones de moindre résistance 1032 est différent.

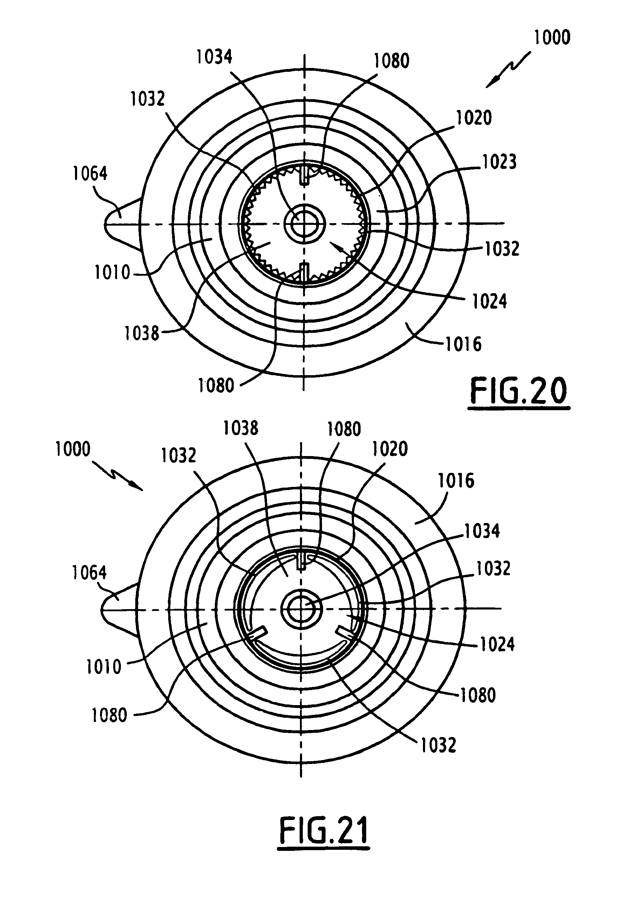

Dans la variante représentée sur la Figure 20, la portion de fond 1038 comprend deux zones de moindre résistance 1032, chacune présentant la forme d'un demi-cercle dentelé et s'étendant à la périphérie de la portion de fond 1038, le long de la jonction avec la portion externe 1036.

Le fond 12 comprend en outre deux nervures 1080 de renforcement de la région centrale 1024. Chaque nervure 1080 s'étend longitudinalement entre la portion tubulaire 1026 et la bordure périphérique 1030. Chaque nervure 1080 est interposée entre les deux zones de moindre résistance 1034. Dans l'exemple représenté, les nervures 1080 sont ainsi diamétralement opposées l'une à l'autre.

Ces nervures 1080 sont destinées à concentrer les efforts de cisaillement dus à la force exercée par le fluide sous pression sur le fond 1012 dans le dispositif d'extraction 1100 sur les zones de moindre résistance 1034.

Dans la variante représentée sur la Figure 21, la portion de fond 1038 comprend trois zones de moindre résistance 1032, chacune étant constituée par une ligne fermée délimitant un croissant dont le grand côté s'étend le long de la portion externe 1036.

Le fond 1012 comprend également des nervures 1080 de renforcement de la région centrale 1024. Ces nervures 1080 sont ici au nombre de trois et chacune est intercalée entre deux zones de moindre résistance 1032.

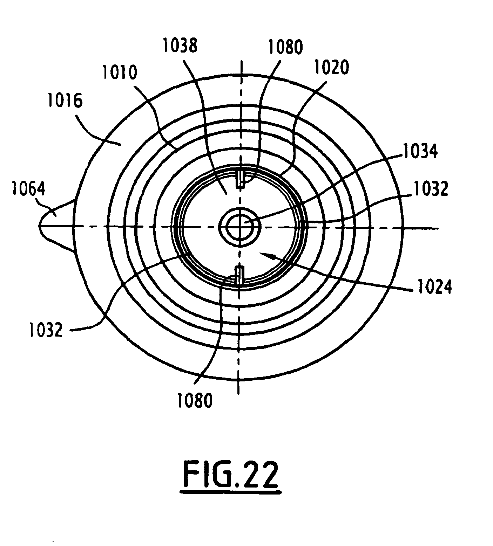

Enfin, dans la variante présentée sur la Figure 22, la portion de fond 1038 comprend une unique zone de moindre résistance 1032 constituée par une ligne circulaire fermée s'étendant le long de la portion externe 1036.

Le procédé de fabrication de la capsule 1000 va être brièvement décrit, en regard de la Figure 10.

Dans un premier temps, le premier matériau plastique est coulé, par exemple injecté, dans un moule, pour former le fond 1012 et la paroi latérale extérieure 1010. Puis, dans un deuxième temps, le deuxième matériau plastique est à son tour coulé dans le moule, de façon à former le rebord annulaire 1016.

Les premier et deuxième matériaux plastiques étant des matériaux compatibles, ils se lient chimiquement. En particulier, une partie des molécules du premier matériau diffuse dans le deuxième matériau et vice-versa. Ainsi, il se forme une fine couche dans laquelle les deux matériaux sont mélangés et les deux matériaux sont ainsi intimement liés l'un avec l'autre.

Grâce à l'invention, la partie du corps de la capsule en contact avec la substance est formée dans un matériau inerte vis-à-vis de la substance, ce qui permet de conserver la substance dans des conditions optimales, sans risques de dégradation de la substance par oxydation ou par des éléments toxiques contenus dans le matériau en contact avec la substance.

En outre, le fait que le premier matériau plastique ne soit pas coloré dans la masse permet de réduire la probabilité de migration d'éléments toxiques de la capsule vers la substance.

Enfin, le fait d'utiliser un deuxième matériau pour le rebord annulaire permet de réduire le coût de fabrication de la capsule et permet en outre, par coloration du deuxième matériau, d'identifier aisément la substance contenue dans la chambre de la capsule, sans risque de migration des pigments dans la substance, celle-ci n'étant pas en contact avec le deuxième matériau.

On notera que la description donnée ci-dessus n'est nullement restrictive, et les caractéristiques des différentes variantes et des différents modes de réalisation peuvent être combinées les unes avec les autres sans sortir du cadre de l'invention.

## Revendications

1. Capsule (1, 1000) pour l'extraction d'une boisson sous pression, du type comprenant un corps (4, 1004) en forme de coupelle et un opercule (6, 1006) délimitant ensemble une chambre (8, 1008) contenant une substance pour la préparation d'une boisson, le corps (4, 1004) comprenant une paroi latérale extérieure (10, 1010) sensiblement tronconique et un fond (12, 1012) venu de matière avec la paroi latérale extérieure (10, 1010) et fermant la paroi latérale extérieure (10, 1010) à une extrémité arrière (20, 1020) du corps (4, 1004), l'opercule (6, 1006) fermant la paroi latérale extérieure (10, 1010) à l'extrémité avant (22, 1022) du corps (4, 1004), la capsule (1, 1000) étant adaptée pour être disposée dans un dispositif d'extraction (350, 1100) de sorte qu'un liquide d'extraction sous pression pénètre dans la capsule (1, 1000) par le fond (12, 1012) et en sorte par l'opercule (6, 1006), le fond (12, 1012) étant constitué par une région périphérique (23, 1023) délimitant une extrémité arrière (20, 1020) du corps (4, 1004), et par une région centrale (24, 1024) rentrant vers l'intérieur de la capsule (1, 1000) par rapport à l'extrémité arrière (20, 1020) en définissant un évidement (28, 1028) à l'extérieur du corps (4, 1004), **caractérisée en ce que** la région centrale (24, 1024) comprend au moins une zone de moindre résistance (32, 1032) prévue pour se rompre au moins partiellement sous la pression d'un liquide sous pression, et **en ce que** le corps (4, 1004) est dans un matériau plastique ou dérivé du plastique.

2. Capsule (1, 1000) selon la revendication 1, **caractérisée en ce que** la région centrale (24, 1024) comprend une portion de fond (38, 1038) et un plot central (30, 1030) faisant saillie depuis la portion de fond (38, 1038) vers l'extérieur.

3. Capsule (1, 1000) selon la revendication 2, **caractérisée en ce que** la région centrale (24, 1024) comprend une nervure annulaire (12, 1012) faisant saillie vers l'intérieur du corps (4, 1004), l'évidement (28, 1028) présentant la forme d'une tranchée annulaire à l'extérieur du corps (4, 1004).

4. Capsule (1, 1000) selon la revendication 1, **caractérisée en ce que** la région centrale (24, 1024) comprend une portion de fond (38, 1038) plate fermant axialement l'évidement (28, 1028).

5. Capsule (1, 1000) selon l'une quelconque des revendications 2 à 4, dans laquelle la ou chaque région de moindre résistance (32, 1032) est formée dans la portion de fond (38, 1038).

6. Capsule (1, 1000) selon la revendication 5, **caractérisée en ce que** la région centrale (24, 1024) comprend une portion externe (36, 1036) tubulaire s'étendant axialement vers l'intérieur de la chambre (8, 1008) à partir de la région périphérique (23, 1023), la ou chaque zone de moindre résistance (32, 1032) étant formée à la jonction entre la portion de fond (38, 1038) et la portion externe (36, 1036).

7. Capsule (1, 1000) selon l'une quelconque des revendications précédentes, **caractérisée en ce que** le fond (12, 1012) comprend au moins une nervure (1080) de renforcement de la région centrale (24, 1024).

8. Capsule (1, 1000) selon l'une quelconque des revendications précédentes, **caractérisée en ce que** le corps (4, 1004) comprend au moins une nervure radiale (1044) de rigidification de la région périphérique (23, 1023).

9. Capsule (1, 1000) selon l'une quelconque des revendications précédentes, **caractérisée en ce que**, avant rupture de la ou chaque zone de moindre résistance (32, 1032), le fond (12, 1012) et la paroi latérale extérieure (10, 1010) du corps (4, 1004) sont imperméables à l'air et aux liquides.

10. Capsule (1, 1000) selon la revendication 2 ou 3, **caractérisée en ce que** le plot central (30, 1040) a une forme tronconique.

11. Capsule (1, 1000) selon la revendication 2 ou 3, **caractérisée en ce que** le plot central (30, 1040) a une forme hémisphérique.

12. Capsule (1, 1000) selon l'une quelconque des revendications précédentes, **caractérisée en ce que** l'opercule (6, 1006) comprend un filtre (49, 1060) et une membrane (50, 1062).

13. Capsule (1, 1000) selon la revendication 12, **caractérisée en ce que** le filtre (49, 1060) est disposé en retrait de l'extrémité avant (22, 1022) du corps (4, 1004), vers la chambre (8, 1008), la membrane (50, 1062) s'étendant le long de l'extrémité avant (22, 1022).

14. Capsule (1, 1000) selon la revendication 13, **caractérisée en ce que** l'espace entre le filtre (49, 1060) et la membrane (50, 1062) est rempli d'azote.

15. Capsule (1, 1000) selon l'une quelconque des revendications 12 à 14, **caractérisée en ce que** la membrane (50, 1062) est pelable.

16. Capsule (1, 1000) selon l'une quelconque des revendications précédentes, **caractérisé en ce que** la paroi latérale extérieure (10, 1010) et le fond (12, 1012) sont formés d'une première matière plastique, et **en ce que** le corps (4, 1004) comprend un rebord annulaire (16, 1016) s'étendant radialement vers l'extérieur depuis la paroi latérale extérieure (10, 1010) et délimitant l'extrémité avant (22, 1022) du corps (4, 1004), ledit rebord annulaire (16, 1016) étant formé d'une deuxième matière plastique, différente de la première matière plastique.

17. Capsule (1, 1000) selon l'une quelconque des revendications précédentes, **caractérisée en ce que** la ou chaque zone de moindre résistance (32, 1032) est adaptée pour se rompre à une pression du liquide sous pression comprise entre 1 et 3 bars.

18. Système comprenant une capsule (1, 1000) selon l'une quelconque des revendications précédentes et un dispositif d'extraction (350, 1100) comportant un logement (353) destiné à recevoir la capsule (1, 1000), un support (354), et un conduit (372) d'amenée de liquide d'extraction sous pression.

## Patentansprüche

1. Kapsel (1, 1000) zur Extraktion eines Getränks unter Druck, die einen kuppelförmigen Körper (4, 1004) und einen Deckel (6, 1006) umfasst, die gemeinsam eine Kammer (8, 1008) begrenzen, die eine Substanz zur Zubereitung eines Getränks enthält, wobei der Körper (4, 1004) eine etwa kegelstumpfförmige äußere Seitenwand (10, 1010) und einen in einem Stück mit der äußeren Seitenwand (10, 1010) gefertigten Boden (12, 1012) umfasst, der die äußere Seitenwand (10, 1010) an einem hinteren Ende (20, 1020) des Körpers (4, 1004) verschließt, wobei der Deckel (6, 1006) die äußere Seitenwand (10, 1010) am vorderen Ende (22, 1022) des Körpers (4, 1004) verschließt, wobei die Kapsel (1, 1000) dazu geeignet ist, um derart in einer Extraktionsvorrichtung (350, 1100) angeordnet zu sein, dass eine Extraktionsflüssigkeit unter Druck in die Kapsel (1, 1000) durch den Boden (12, 1012) eindringt und diese durch den Deckel (6, 1006) verlässt, wobei der Boden (12, 1012) von einer Umfangsregion (23, 1023) gebildet wird, die ein hinteres Ende (20, 1020) des Körpers (4, 1004) begrenzt, und von einer zentralen Region (24, 1024), die im Verhältnis zum hinteren Ende (20, 1020) in das Innere der Kapsel (1, 1001) hineinragt und eine Aussparung (28, 1028) außerhalb des Körpers (4, 1004) definiert, **dadurch gekennzeichnet, dass** die zentrale Region (24, 1024) mindestens eine Zone geringerer Festigkeit (32, 1032) umfasst, die vorgesehen ist, unter dem Druck einer Flüssigkeit unter Druck zumindest teilweise zu brechen, und dass der Körper (4, 1004) aus einem Kunststoffmaterial oder einem Kunststoffderivat ist.

2. Kapsel (1, 1000) nach Anspruch 1, **dadurch gekennzeichnet, dass** die zentrale Region (24, 1024) einen Bodenabschnitt (38, 1038) und einen zentralen Höcker (30, 1030) umfasst, der aus dem Bodenabschnitt (38, 1038) nach außen hervorsteht.

3. Kapsel (1, 1000) nach Anspruch 2, **dadurch gekennzeichnet, dass** die zentrale Region (24, 1024) eine ringförmige Rippe (12, 1012) umfasst, die in den Körper (4, 1004) hineinragt, wobei die Aussparung (28, 1028) die Form eines ringförmigen Einschnitts außerhalb des Körpers (4, 1004) aufweist.

4. Kapsel (1, 1000) nach Anspruch 1, **dadurch gekennzeichnet, dass** die zentrale Region (24, 1024) einen flachen Bodenabschnitt (38, 1038) umfasst, der die Aussparung (28, 1028) axial verschließt.

5. Kapsel (1, 1000) nach einem der Ansprüche 2 bis 4, wobei die oder jede Region geringerer Festigkeit (32, 1032) im Bodenabschnitt (38, 1038) ausgebildet ist.

6. Kapsel (1, 1000) nach Anspruch 5, **dadurch gekennzeichnet, dass** die zentrale Region (24, 1024) einen rohrförmigen externen Abschnitt (36, 1036) umfasst, der sich ab der Umfangsregion (23, 1023) axial nach in das Innere der Kammer (8, 1008) erstreckt, wobei die oder jede Zone geringerer Festigkeit (32, 1032) an der Verbindung zwischen dem Bodenabschnitt (38, 1038) und dem externen Abschnitt (36, 1036) gebildet ist.

7. Kapsel (1, 1000) nach einem der vorangehenden Ansprüche, **dadurch gekennzeichnet, dass** der Boden (12, 1012) mindestens eine Verstärkungsrippe (1080) für die Verstärkung der zentralen Region (24, 1024) umfasst.

8. Kapsel (1, 1000) nach einem der vorangehenden Ansprüche, **dadurch gekennzeichnet, dass** der Körper (4, 1004) mindestens eine radiale Versteifungsrippe (1044) für die Versteifung der Umfangsregion (23, 1023) umfasst.

9. Kapsel (1, 1000) nach einem der vorangehenden Ansprüche, **dadurch gekennzeichnet, dass** der Boden (12, 1012) und die äußere Seitenwand (10, 1010) des Körpers (4, 1004) vor dem Brechen der oder jeder Zone geringerer Festigkeit (32, 1032) undurchlässig für Luft und Flüssigkeiten sind.

10. Kapsel (1, 1000) nach Anspruch 2 oder 3, **dadurch gekennzeichnet, dass** der zentrale Höcker (30, 1040) eine kegelstumpfförmige Form hat.

11. Kapsel (1, 1000) nach Anspruch 2 oder 3, **dadurch gekennzeichnet, dass** der zentrale Höcker (30, 1040) eine halbkugelförmige Form hat.

12. Kapsel (1, 1000) nach einem der vorangehenden Ansprüche, **dadurch gekennzeichnet, dass** der Deckel (6, 1006) einen Filter (49, 1060) und eine Membran (50, 1062) umfasst.

13. Kapsel (1, 1000) nach Anspruch 12, **dadurch gekennzeichnet, dass** der Filter (49, 1060) zurückgezogen vom vorderen Ende (22, 1022) des Körpers (4, 1004) in Richtung der Kammer (8, 1008) angeordnet ist, wobei sich die Membran (50, 1062) entlang des vorderen Endes (22, 1022) erstreckt.

14. Kapsel (1, 1000) nach Anspruch 13, **dadurch gekennzeichnet, dass** der Raum zwischen dem Filter (49, 1060) und der Membran (50, 1062) mit Stickstoff gefüllt ist.

15. Kapsel (1, 1000) nach einem der Ansprüche 12 bis 14, **dadurch gekennzeichnet, dass** die Membran (50, 1062) abziehbar ist.

16. Kapsel (1, 1000) nach einem der vorangehenden Ansprüche, **dadurch gekennzeichnet, dass** die äußere Seitenwand (10, 1010) und der Boden (12, 1012) aus einem ersten Kunststoff gebildet sind und dass der Körper (4, 1004) einen ringförmigen Rand (16, 1016) umfasst, der sich von der äußeren Seitenwand (10, 1010) radial nach außen erstreckt und das vordere Ende (22, 1022) des Körpers (4, 1004) begrenzt, wobei der ringförmige Rand (16, 1016) von einem zweiten Kunststoff gebildet ist, der sich von dem ersten Kunststoff unterscheidet.

17. Kapsel (1, 1000) nach einem der vorangehenden Ansprüche, **dadurch gekennzeichnet, dass** die oder jede Zone geringerer Festigkeit (32, 1032) geeignet ist, unter dem Druck einer Flüssigkeit unter Druck zwischen 1 und 3 bar inklusive zu brechen.

18. System, das eine Kapsel (1, 1000) nach einem der vorangehenden Ansprüche und eine Extraktionsvorrichtung (350, 1100) umfasst, die eine Aufnahme (353), die zur Aufnahme der Kapsel (1, 1000) bestimmt ist, eine Unterlage (354) und eine Zuführungsleitung (372) für die Zuführung einer Extraktionsflüssigkeit unter Druck aufweist.

## Claims

1. Capsule (1, 1000) for the extraction of a beverage under pressure, of the type comprising a body (4, 1004) in the shape of a cup and a lid (6, 1006) delimiting together a chamber (8, 1008) containing a substance for the preparation of a beverage, the body (4, 1004) comprising a substantially frustoconical exterior lateral wall (10, 1010) and a bottom (12, 1012) integral with the exterior lateral wall (10, 1010) and closing the exterior lateral wall (10, 1010) at a rear end (20, 1020) of the body (4, 1004), the lid (6, 1006) closing the exterior lateral wall (10, 1010) at the front end (22, 1022) of the body (4, 1004), the capsule (1, 1000) being adapted to be arranged in an extraction device (350, 1100) in such a way that an extraction liquid under pressure penetrates into the capsule (1, 1000) via the bottom (12, 1012) and exits thereof via the lid (6, 1006), the bottom (12, 1012) being constituted of a peripheral region (23, 1023) delimiting a rear end (20, 1020) of the body (4, 1004), and of a central region (24, 1024) entering towards the interior of the capsule (1, 1000) in relation to the rear end (20, 1020) defining a recess (28, 1028) at the exterior of the body (4, 1004), **characterised in that** the central region (24, 1024) comprises at least one zone of least resistance (32, 1032) designed to break at least partially under the pressure of a liquid under pressure and **in that** the body is made of plastic or plastic-based material.

2. Capsule (1, 1000) according to claim 1, **characterised in that** the central region (24, 1024) comprises a bottom portion (38, 1038) and a central lug (30, 1030) protruding from the bottom portion (38, 1038) towards the exterior.

3. Capsule (1, 1000) according to claim 2, **characterised in that** the central region (24, 1024) comprises an annular rib (12, 1012) protruding towards the interior of the body (4, 1004), the recess (28, 1028) having the shape of an annular trench at the exterior of the body (4, 1004).

4. Capsule (1, 1000) according to claim 1, **characterised in that** the central region (34) comprises a flat bottom portion (38, 1038) closing axially the recess (28, 1028).

5. Capsule (1, 1000) according to any of claims 2 to 4, wherein the or each region of least resistance (32, 1032) is formed in the bottom portion (38, 1038).

6. Capsule (1, 1000) according to claim 5, **characterised in that** the central region (24, 1024) comprises a tubular external portion (36, 1036) extending axially towards the interior of the chamber (8, 1008) starting from the peripheral region (23, 1023), the or each zone of least resistance (32, 1032) being formed at the junction between the bottom portion (38, 1038) and the external portion (36, 1036).

7. Capsule (1, 1000) according to any of preceding claims, **characterised in that** the bottom (12, 1012) comprises at least one rib (1080) for reinforcement of the central region (24, 1024).

8. Capsule (1, 1000) according to any of preceding claims, **characterised in that** the body (4, 1004) comprises at least one radial rib (1044) for the stiffening of the peripheral region (23, 1023).

9. Capsule (1, 1000) according to any of preceding claims, **characterised in that**, before breakage of the or each zone of least resistance (32, 1034), the bottom (12, 1012) and the exterior lateral wall (10, 1010) of the body (4, 1004) are impermeable to air and liquids.

10. Capsule (1, 1000) according to claim 2 or 3, **characterised in that** the central lug (30, 1040) has a frustoconical shape.

11. Capsule (1, 1000) according to claim 2 or 3, **characterised in that** the central lug (30, 1040) has a hemispherical shape.

12. Capsule (1, 1000) according to any of preceding claims, **characterised in that** the lid (6, 1006) comprises a filter (49, 1060) and a membrane (50, 1062).

13. Capsule (1, 1000) according to claim 12, **characterised in that** the filter (49, 1060) is set back relative to the front end (22, 1022) of the body (4, 1004), towards the chamber (8, 1008), the membrane (50, 1062) extending along the front end (22, 1022).

14. Capsule (1, 1000) according to claim 13, **characterised in that** the space between the filter (49, 1060) and the membrane (50, 1062) is filled with nitrogen.

15. Capsule (1, 1000) according to any of claims 12 to 14, **characterised in that** the membrane (50, 1062) is strippable.

16. Capsule (1, 1000) according to any of preceding claims, **characterised in that** the exterior lateral wall (10, 1010) and the bottom (12, 1012) are formed from a first plastic material, and **in that** the body (4, 1004) comprises an annular edge (16, 1016) extending radially towards the exterior from the exterior lateral wall (10, 1010) and delimiting the front end (22, 1022) of the body (4, 1004), said annular edge (16, 1016) being formed from a second plastic material, that is different from the first plastic material.

17. Capsule (1, 1000) according to any of preceding claims, **characterised in that** the or each zone of least resistance (32, 1032) is adapted to break at a pressure of the liquid under pressure between 1 and 3 bars.

18. System comprising a capsule (1, 1000) according to any of the preceding claims and an extraction device (350, 1100) comprising a housing (353) intended to receive the capsule (1, 1000), a support (354), and a duct (372) for channelling extraction liquid under pressure.
